# EUROPÄISCHE PATENTSCHRIFT

(11) **EP 3 044 048 B1**
(45) Veröffentlichungstag und Bekanntmachung des Hinweises auf die Patenterteilung: **10.06.2020**
(21) Anmeldenummer: 14747674.1
(22) Anmeldetag: 06.08.2014
(51) Int. Cl.: B60S 1/38, B60S 1/34, B60S 1/52

(54) **SCHEIBENWISCHVORRICHTUNG FÜR EIN FAHRZEUG, HERSTELLUNGSVERFAHREN EINER SCHEIBENWISCHVORRICHTUNG UND BAUKASTEN UM HERSTELLEN EINER SCHEIBENWISCHVORRICHTUNG**
WINDOW-WIPING DEVICE FOR A VEHICLE, PRODUCTION METHOD OF A WINDOW-WIPING DEVICE, AND MODULAR KIT FOR PRODUCING A WINDOW-WIPING DEVICE
SYSTÈME D'ESSUIE-GLACE DE VÉHICULE, PROCÉDÉ DE FABRICATION D'UN SYSTÈME D'ESSUIE-GLACE ET MODULE SERVANT À FABRIQUER UN SYSTÈME D'ESSUIE-GLACE

(30) Priorität: 09.09.2013 DE 102013217962
(43) Veröffentlichungstag der Anmeldung: 20.07.2016
(73) Patentinhaber: Robert Bosch GmbH, 70442 Stuttgart (DE)
(72) Erfinder: BECKER, Joerg, 76571 Gaggenau - Bad Rotenfels (DE); WEILER, Michael, 77815 Buehl (DE)
(86) Internationale Anmeldenummer: PCT/EP2014/066903
(87) Internationale Veröffentlichungsnummer: WO 2015/032569

(56) Entgegenhaltungen:
- WO-A1-99/29546
- WO-A1-2014/072186
- WO-A1-2015/007350
- GB-A- 1 425 568
- GB-A- 2 336 765
- US-A- 5 361 896
- US-B1- 6 301 742

## Beschreibung

Ausführungsformend der Erfindung betreffen eine Scheibenwischvorrichtung für ein Fahrzeug, insbesondere ein Kraftfahrzeug, weiterhin eine Verfahren zum Herstellen einer Scheibenwischvorrichtung.

### Stand der Technik

Scheibenwischvorrichtungen haben typischerweise einen Wischarm oder Wischhebel, wobei ein Wischblatt auf der Scheibe eines Kraftfahrzeugs o.ä. bewegt wird. Dabei wird das Wischblatt zwischen einer oberen Wendelage und einer unteren bewegt. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Möglichkeit Kunden mit flexiblen Lösungen zufrieden zu stellen. Es gilt bei Wischvorrichtungen für Fahrzeuge dabei zu berücksichtigen, dass der Kostendruck stetig steigt und durch bessere OEM Bedingungen die Kundenzufriedenheit gesteigert werden kann.
Als weiterer Stand der Technik ist die US 6301742 B1 bekannt geworden. Weiterhin ist die nicht vorveröffentlichte, und daher nur im Hinblick auf Neuheit zu berücksichtigende WO 2015/007350A1 bekannt.

### Offenbarung der Erfindung

Es ist die Aufgabe der vorliegenden Erfindung, zumindest teilweise die Probleme des Standes der Technik zu verbessern und/oder ein zuverlässiges, weitgehend schlierenfreies Wischen einer Scheibe eines Fahrzeugs zu gewährleisten.

Diese Aufgabe wird gelöst durch eine Scheibenwischvorrichtung mit den Merkmalen gemäß Anspruch 1.

Die vorliegende Erfindung und ihre Ausführungsformen ermöglichen vorteilhafterweise eine besonders gute Anpassung der Scheibenwischvorrichtung an die Krümmung einer Scheibe unter der Randbedingung ein flexibles Baukastensystem für unterschiedliche Kunden zu schaffen.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung beinhaltet ein langgestrecktes Oberteil, das zumindest teilweise biegbar ausgestaltet ist, ein langgestrecktes Unterteil, das zumindest teilweise biegbar ausgestaltet ist, und mehrere Verbindungselemente zum Verbinden des Oberteils und des Unterteils, wobei die Verbindungselemente entlang einer Längserstreckung des Wischblatts voneinander beabstandet sind, wobei die Verbindungselemente ausgelegt sind, um eine Bewegung des Oberteils und des Unterteils relativ zu einander mit einer Bewegungskomponente entlang einer Längserstreckung des Wischblatts zu ermöglichen, wobei die Verbindungselemente mittels Drehgelenken mit dem Unterteil und dem Oberteil verbunden sind, und wobei das Oberteil und das Unterteil mit einem Anschlussstück verbunden sind. Gemäß der Erfindung können alle Elemente ausgewählt aus der Gruppe bestehend aus: dem Oberteil, dem Unterteil, einem Verbindungselement der mehreren Verbindungselemente, und dem Anschlussstück, individuell ausgewechselt werden. Hierdurch kann ein Baukastenprinzip insbesondere mit spezifisch angepassten Anschlusstücken zur Verfü gung gestellt werden. Ein komplexes Spritzguss-Werkzeug für ein einzelnes Projekt kann somit entfallen.

Bevorzugte Ausführungsformen und besondere Aspekte der Erfindung ergeben sich aus den abhängigen Ansprüchen, den Zeichnungen und der vorliegenden Beschreibung.

Gemäß weiteren typischen Ausführungsformen sind das Oberteil und das Unterteil mit Drehgelenken bzw. weiteren Drehgelenken an den Verbindungselementen verbunden. Die Drehgelenke am Oberteil und Unterteil ermöglichen eine Bewegung nach dem Fin-Ray-Prinzip und dienen somit der besonders guten Anpassung der Scheibenwischvorrichtung bzw. eine Wischlippe an die Scheibe.

Gemäß einer weiteren typischen Ausführungsform können die Drehgelenke und/oder die weiteren Drehgelenke zum Oberteil eine erstes Gelenkteil und ein zweites Gelenkteil beinhalten. Zum Beispiel kann das erste Gelenkteil zylinderförmig oder kugelförmig sein und das zweite Gelenkteil einen Hinterschnitt zur Aufnahme des ersten Gelenkteils umfassen. Die zweiteilieg Ausgestaltung der Drehgelenke bietet neben der Bereitstellung eines Baukastenprinzips eine Vielzahl von Möglichkeiten Gelenkeigenschaften wie das Kriechverhalten günstig zu beeinflussen. Materialien könne derart gewählt werden, um auch bei hohen Temperaturschwankungen und/oder bei andauernd hohen Umgebungstemperaturen ein zuverlässige bzw. langlebige Gelenkeigenschaften zu ermöglichen.

Gemäß einer weiteren typischen Ausführungsform können das erste und das zweite Gelenkteil aneinander geklipst werden oder zusammengesteckt werden. Hierdurch wird eine besonders einfache Montage im Rahmen des Baukastenprinzips geschaffen.

Gemäß einer typischen Ausführungsform der Erfindung können das Oberteil und das Unterteil, insbesondere in einem Endbereich der Scheibenwischvorrichtung, an einer äußeren Verbindungsposition fest miteinander verbunden. Die äußere Verbindungsposition ist, insbesondere in eine in Längserstreckung der Scheibenwischvorrichtung von außen nach innen weisende Richtung betrachtet, vor den Verbindungselementen ausgebildet. Diese Ausgestaltung gewährleistet vorteilhafterweise eine besonders gute Stabilität der Scheibenwischvorrichtung. Ferner kann eine besonders hohe Flexibilität und Fähigkeit zum Anpassen an die Scheibenkrümmung erreicht werden, wobei ein gleichmäßiger Anpressdruck des Unterteils auf die Scheibe gegeben ist. In einer weiteren vorteilhaften Ausgestaltung können das Ober- und das Unterteil an der äußeren Verbindungsposition so miteinander verbunden sein, dass Ober- und Unterteil einen Keil bilden. Ober- und Unterteil sind insbesondere an ihren Enden miteinander verbunden. Gemäß weiteren Ausgestaltungen können ein oder mehrere erste Verbindungselement und ein oder mehrere zweites Verbindungselemente wie folgt zur Verfügung gestellt sein. Ein erstes Verbindungselement ist im Vergleich zu einem zweiten Verbindungselement derart angeordnet, dass das erste Verbindungselement relativ zum zweiten Verbindungsteil in Richtung der Verbindungsposition des Oberteils und des Unterteils liegt, d.h. in Richtung der Spitze des Keils bzw. außen liegt. Hierbei ist das erste Verbindungselement kürzer als das zweite Verbindungselement. Beispielsweise können zumindest 70 % oder zumindest 50% der Verbindungselemente derart ausgestaltet sein, dass sie nach außen, d.h. in Richtung der Verbindungsposition des Oberteils und des Unterteils, kürzer werden.

Gemäß einer weiteren Ausführungsform können die Längsachsen der Verbindungselemente in Winkeln zum Unterteil verlaufen, die von 45° bis 135°, insbesondere von 65° und 115° zur Verfügung gestellt sind. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden.

Gemäß einer weiteren Ausführungsform kann der Abstand zwischen jeweils zwei benachbarten Verbindungselementen kleiner als 50 mm, insbesondere kleiner als 30 mm sein. Dadurch ist eine besonders hohe Flexibilität der Scheibenwischvorrichtung, insbesondere ihres Unterteils, und gute Anpassung an die Krümmung und Krümmungsänderungen der zu wischenden Scheibe gewährleistet.

Gemäß einer weiteren vorteilhaften Ausführungsform ist eine biegbare Scheibenwischerlippe an einer Seite des Unterteils angebracht, die dem Oberteil abgewandt ist. Dadurch ist vorteilhafterweise eine besonders hohe Funktionalität der Scheibenwischvorrichtung gegeben.

Gemäß einer weiteren vorteilhaften Ausführungsform kann die Scheibenwischerlippe in eine Aussparung oder Schiene am Unterteil eingeführt sein, insbesondere lösbar verbindbar ist. Hierdurch kann die Scheibenwischerlippe einfach ausgetauscht werden, wobei insbesondere ein Austausch der Scheibenwischerlippe mit geringem Materialsaufwand zur Verfügung gestellt werden kann.

Gemäß einer weiteren vorteilhaften Ausführungsform kann das Oberteil und/oder das Unterteil eine Zuleitung für Wasser aufweisen, insbesondere kann die Zuleitung eine Röhre zur Wasserführung sein, insbesondere eine mit dem Oberteil und/oder Unterteil einstückig ausgebildete Röhre. Weiterhin kann die Zuleitung Öffnungen, insbesondere Düsenöffnungen, umfassen. Hierdurch kann eine ScheibenWischwasser Zuführung zur Verfügung gestellt werden, die zum Beispiel beim Spritzen des Oberteils und/oder Unterteils direkt zur Verfügung gestellt wird.

Gemäß einer weiteren Ausführungsform kann zwischen dem Oberteil und dem Unterteil ein Zwischenraum ausgebildet sein, in dem ein Spoiler zum Beeinflussen einer in den Zwischenraum eindringenden Luftströmung angeordnet ist. Dadurch kann das genaue Wischen der Scheibe vorteilhafterweise weiter verbessert werden. Beispielsweise kann der Spoiler so ausgestaltet sein, dass gerade bei hohen Fahrgeschwindigkeiten des Fahrzeugs eine Kompensation einer Windauftriebskraft erfolgt, die ansonsten den Anpressdruck der Scheibenwischvorrichtung auf die Scheibe verringert. Der Spoiler kann ferner so ausgestaltet sein, dass ein Windauftrieb genutzt wird, um die Scheibenwischvorrichtung nach unten in Richtung der Scheibe zu drücken. Der Anpressdruck der Scheibenwischvorrichtung wird erhöht und ihr besonders genaues Anlegen auf die Krümmung der Scheibe gewährleistet.

Gemäß einer weiteren Ausführungsform können die Drehgelenke eine Biegesteifigkeit von 75Nmm/rad oder kleiner haben. Hierdurch kann eine gute Flexibilität für den Finray-Effekt zur Verfügung gestellt werden.

Gemäß einer weiteren Ausführungsform ist ein Verfahren zum Herstellen einer Scheibenwischvorrichtung, insbesondere einer Scheibenwischvorrichtung nach einem der hier beschriebenen Ausführungsformen zur Verfügung gestellt. Das Verfahren beinhaltet herstellen eines Oberteils, das zumindest teilweise biegbar ausgestaltet ist, herstellen eines Unterteils, das zumindest teilweise biegbar ausgestaltet ist, herstellen mehrerer Verbindungselemente zum Verbinden des Oberteils und des Unterteils herstellen eines Anschlussstücks, wobei zumindest eines der Elemente ausgewählt aus der Gruppe aus Oberteil, Unterteil, der mehreren Verbindungselement, und des Anschlussstücks durch spritzen hergestellt werden, und montieren der Elemente ausgewählt aus der Gruppe aus Oberteil, Unterteil, der mehreren Verbindungselement, und des Anschlussstücks, wobei das Montieren insbesondere Stecken oder Klipsen beinhaltet, wobei die Verbindungselemente entlang einer Längserstreckung des Wischblatts voneinander beabstandet sind, wobei die Verbindungselemente ausgelegt sind, um eine Bewegung des Oberteils und des Unterteils relativ zu einander mit einer Bewegungskomponente entlang einer Längserstreckung des Wischblatts zu ermöglichen. Hierdurch kann ein Wischhebelbaukasten, d.h. ein Baukastenprinzip für eine Scheibenwischvorrichtung bzw. einen Wischhebel zur Verfügung gestellt werden. Ein komplexes Spritzguss-Werkzeug für ein einzelnes Projekt kann somit entfallen.

Bevorzugte Ausführungsformen und besondere Aspekte der Erfindung ergeben sich aus den abhängigen Ansprüchen, den Zeichnungen und der vorliegenden Beschreibung.

Gemäß einer typischen Ausführungsform kann das montieren des Anschlussstücks stecken, kleben oder Lasern beinhalten. Das Anschlussstück, kann somit kundenspezifisch, d.h. auf ein Fahrzeug angepasst, einfach zur Verfügung gestellt werden.

Gemäß einer weiteren Ausführungsform wird ein Verfahren zum Herstellen einer Scheibenwischvorrichtung, insbesondere einer Scheibenwischvorrichtung nach einer der hierin beschriebenen Ausführungsformen zur Verfügung gestellt. Das Verfahren beinhaltet das Herstellen eins Oberteils, das zumindest teilweise biegbar ausgestaltet ist und erste Gelenkteile aufweist, das Herstellen eines Unterteils, das zumindest teilweise biegbar ausgestaltet ist und erste Gelenkteile aufweist, und das Herstellen mehrere Verbindungselemente zum Verbinden des Oberteils und des Unterteils, wobei die Verbindungselemente jeweils zweite Gelenkteile aufweisen. Das Verfahren beinhaltet Zusammenklipsen der ersten und zweiten Gelenkteile. Alternativ oder zusätzlich zu einem Zusammenklipsen kann als weitere optionale Modifikation das Oberteil und/oder das Unterteil gebogen werden, um das jeweilige erste Gelenkteil zur Aufnahme des zweiten Gelenkteils zu Verformen. Vorteilhafterweise ist die Scheibenwischvorrichtung so ausgestaltet, dass zwischen den Verbindungselementen und dem Unterteil Torsionsbewegungen möglich sind. Dies gewährleistet eine hohe Flexibilität und Anpassungsfähigkeit des Unterteils. Des Weiteren sind die Verbindungselemente in einer vorteilhaften Ausgestaltung der Erfindung mittels Drehgelenken ebenfalls an dem Oberteil befestigt. Dies gewährleistet eine noch bessere Anpassungsfähigkeit der Scheibenwischvorrichtung an die zu wischende Scheibe, wobei insbesondere ein hoher Anpressdruck auf die Scheibe, und damit eine besonders gute Reinigungs- und Wischwirkung, erzielbar ist. Besonders vorteilhaft ist die Scheibenwischvorrichtung so ausgestaltet, dass zwischen den Verbindungselementen und dem Oberteil ebenfalls Torsionsbewegungen möglich sind. Vorteilhafterweise sind die Drehgelenke Scharniere. Die erfindungsgemäße Scheibenwischvorrichtung ist insbesondere so ausgestaltet, dass Oberteil und Unterteil balkenförmig ausgestaltet sind. Des Weiteren ist es vorteilhafterweise möglich, dass Oberteil und Unterteil zumindest teilweise biegeelastisch sind. Gemäß einer Ausführungsform der Erfindung sind Ober- und Unterteil gegeneinander verschieblich. In einer weiteren Ausführungsform ist das Oberteil gegenüberliegend dem Unterteil angeordnet. Die Verbindungselemente sind an sich einander zugewandten Innenseiten des Ober- und -Unterteils befestigt. Besonders vorteilhaft sind die Verbindungselemente knicksteif ausgebildet.

Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Gemäß einer weiteren Ausführungsform wird ein Baukasten für die Herstellung von zumindest zwei Scheibenwischvorrichtungen gemäß den hier beschriebenen Ausführungsformen zur Verfügung gestellt. Der Baukasten beinhaltet Elemente aus der Gruppe beinhaltend: zumindest zwei langgestreckten Oberteil, die zumindest teilweise biegbar ausgestaltet sind, zumindest zwei langgestreckten Unterteilen, die zumindest teilweise biegbar ausgestaltet ist, und mehreren Verbindungselementen zum Verbinden eines der zumindest zwei Oberteile und eines der zumindest zwei Unterteile, wobei die Verbindungselemente entlang einer Längserstreckung des Wischblatts voneinander beabstandet sind, wobei die Verbindungselemente ausgelegt sind, um eine Bewegung von Oberteil und Unterteil relativ zu einander mit einer Bewegungskomponente entlang einer Längserstreckung des Wischblatts zu ermöglichen, wobei aus den zumindest zwei langestreckten Oberteilen, den zumindest zwei langestreckten Unterteilen und den mehreren Verbindungselementen zumindest zwei unterschiedliche Scheibenwischvorrichtungen montierbar sind, und wobei für beide der zwei unterschiedlichen Scheibenwischvorrichtungen zumindest eines der verwendeten Elemente identisch ist.

### Kurze Beschreibung der Zeichnungen

Ausführungsbeispiele der Erfindung sind in den Figuren dargestellt und werden im Folgenden näher beschrieben. Es zeigen:
Figur 1A eine schematische Darstellung eines Ausführungsbeispiels einer erfindungsgemäßen Scheibenwischvorrichtung in Form eines Wischblatts in einer Grundstellung,
Figur 1B eine schematische Darstellung des Wischblatts nach Fig. 1A in einer an eine Scheibe angelegten Stellung,
Figur 2A eine schematische Darstellung eines Ausführungsbeispiels einer erfindungsgemäßen Scheibenwischvorrichtung in Form eines Wischblatts in einer Grundstellung,
Figur 2B eine schematische Darstellung des Wischblatts nach Fig. 1A in einer an eine Scheibe angelegten Stellung,
Figur 3 einen Ausschnitt einer schematische Darstellung eines Ausführungsbeispiels einer erfindungsgemäßen Scheibenwischvorrichtung in Form eines Wischblatts,
Figuren 4A bis 4E zeigen schematische Darstellungen von eine Drehgelenken gemäß Ausführungsbeispielen erfindungsgemäßer Scheibenwischvorrichtung in Form eines Wischblatts, wobei ein erstes Gelenkteil und ein zweites Gelenkteil zur Ausgestaltung des Gelenks verwendet werden,
Figur 5 eine schematische Darstellung eines Ausschnitts eines weiteren Ausführungsbeispiels einer erfindungsgemäßen Scheibenwischvorrichtung,
Figuren 6A bis 6B eine schematische Darstellung zur Illustration von Komponenten zum Zusammenbau einer Scheibenwischvorrichtung gemäß Ausführungsformen der vorliegenden Erfindung,
Figur 7 eine schematische Darstellung eines Ausschnitts eines weiteren Ausführungsbeispiels einer erfindungsgemäßen Scheibenwischvorrichtung, wobei die Verbindung der Komponenten aus den Figuren 5A bis 5C vergrößert dargestellt ist,
Figur 8 eine schematische Darstellung eines Ausschnitts eines Oberteils eines Wischblatts gemäß weitern Ausführungsformen der vorliegenden Erfindung,
Figur 9 eine schematische Darstellung eines Ausschnitts eines Unterteils eines Wischblatts gemäß weitern Ausführungsformen der vorliegenden Erfindung, und
Figur 10 zeigt ein Ablaufdiagramm zur Illustration von Ausführungsformen der Herstellung von Scheibenwischvorrichtungen gemäß weitern Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

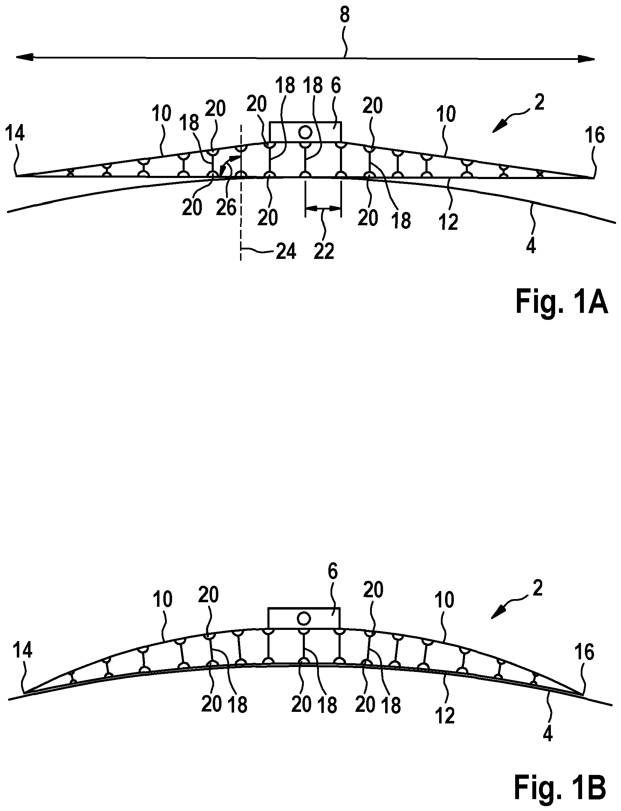

Figuren 1A und 1B zeigen eine schematische Darstellung eines Ausführungsbeispiels einer erfindungsgemäßen Scheibenwischvorrichtung. Die Scheibenwischvorrichtung ist in diesem Ausführungsbeispiel ein Wischblatt 2. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird.

Dazu weist das Wischblatt 2 eine Halterung 6 auf, an der es an dem Scheibenwischerarm befestigt werden kann. Das Wischblatt 2 befindet sich in der Fig. 1A in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in FIG. 1 exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 8 zweiteilig ausgestaltet, wobei dann jeweils ein Ende der beiden Teile des zweiteiligen Oberteils 8 an der Halterung 6 befestigt sind. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm2 und 0,1 kN/mm2, liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in FIG. 1A in etwa quer zur Längserstreckung 8 des Wischblatts 2. Sie können gemäß weiteren Ausführungsformen, die mit den hier beschriebenen Ausführungsformen kombiniert werden können, auch in einem Winkel von größer 90° oder kleiner 90°, insbesondere mit voneinander unterschiedlichen Winkeln verlaufen. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere, die durch stecken oder klipsen zur Verfügung gestellt werden können.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Im vorliegenden Ausführungsbeispiel ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 45° und 135°, insbesondere liegen die Winkel zwischen 65° und 115°. Zum Beispiel können sich diese Winkel in Teilbereichen entlang der Längserstreckung ändern, d.h. von einem Verbindungselement zum nächsten Verbindungselement vergrößern oder verkleinern. Entsprechendes gilt im vorliegenden Ausführungsbeispiel für die Befestigungen der Verbindungselemente 18 an dem Oberteil 10. In der Fig. 1A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt.

Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 1A einen Doppelkeil aus, wobei die Spitzen der beiden Keile in entgegengesetzte Richtungen weisen. Die Verbindungselemente sind knicksteif ausgeführt.

Insbesondere Ausführungsformen der vorliegenden Erfindung beziehen sich auf Heckscheibenwischer. Wobei in einem solchen Fall typischerweise jeweils nur eine Hälfte des in den Figuren 1A und 1B gezeigten Wischblatts vorhanden ist, und das Oberteil und das Unterteil an der Halterung 6 befestigt ist. Die Halterung 6 bildet in diesem Fall typischerweise ein Anschlussstück aus, das OEM-spezifisch für die Befestigung an der Achse für den Wischer an der Heckscheibe zur Verfügung gestellt werden kann. Ferner wird für ein Heckscheibenwischer typischerweise kein Doppelkeil sondern ein einfacher Keil ausgebildet.

Fig. 1B zeigt eine schematische Darstellung des Wischblatts 2 nach Fig. 1A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 1B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich an der dem Oberteil 10 abgewandten Unterseite des Unterteils 12 bei den meisten Wischblättern eine Gummilippe, die aus Gründen der Übersichtlichkeit nicht dargestellt ist und die zum Wischen auf der Scheibe 4 aufsetzt.

Eine solche Scheibenwischvorrichtung, zum Beispiel ein Scheibenwischarm oder Scheibenwischarm mit Scheibenwischblatt, hat den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet.

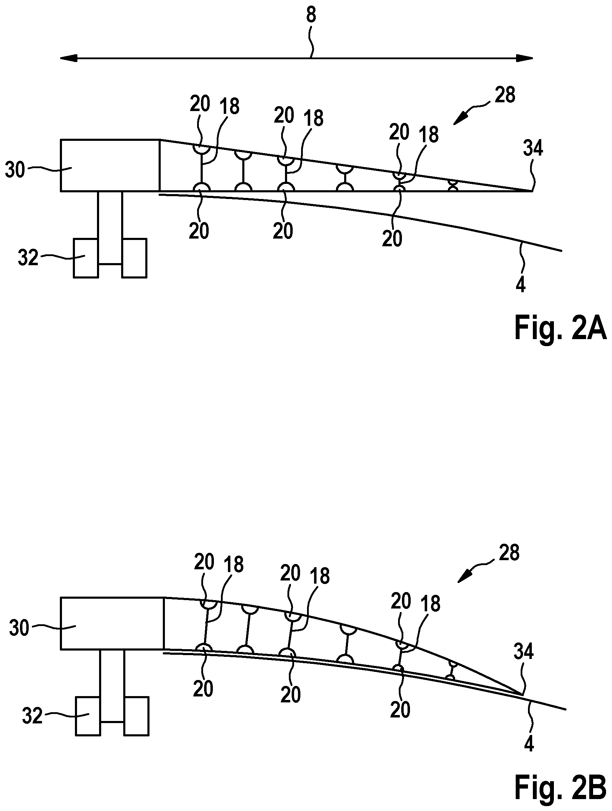

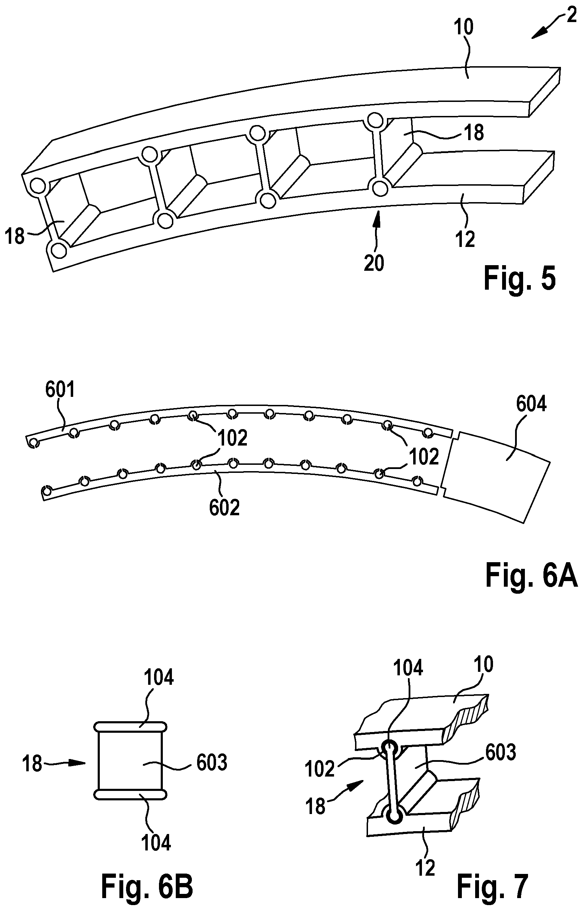

Figuren 1A und 1B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 1A und 1B eine Halbierung der Scheibenwischvorrichtung entspricht, und wobei zum Beispiel an einer Position der Halterung 6 bzw. einem Anschlussstück (siehe z.B. FIG. 6A) eine Drehachse vorgesehen. Eine solche Anordnung wird häufig für Heckscheibenwischer verwendet. Dies ist beispielhaft unter anderem in den Figuren 2A und 2B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 2A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 28, das an einem Befestigungsteil 30 bzw. ein Anschlussstück angebracht ist. Das Befestigungsteil 30 ist mit einem Wischermotor 32 verbunden, der das Befestigungsteil 30 zum Wischen der Scheibe 4 antreibt. Das Wischerblatt 28 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 2A prinzipiell derjenigen nach Fig. 1A.

Fig. 2B zeigt eine schematische Darstellung des Wischblatts 28 mit integriertem Wischerarm 30 nach Fig. 2A in einer an die Scheibe 4 angelegten Stellung. Auch hier wirken von unten aus der Richtung der Scheibe 4 Druckkräfte auf das Unterteil 12 des Wischblatts 28, so dass sich das Unterteil 12 und das Oberteil 10 in Richtung der Scheibe 4 biegen.

Sowohl in FIG. 1A als auch in FIG. 2A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

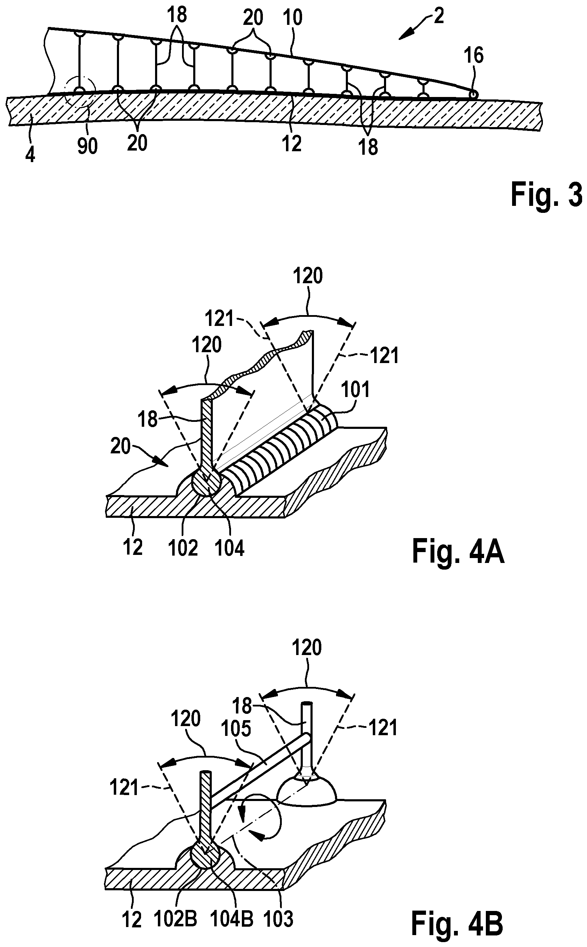

Figur 3 zeigt einen Ausschnitt einer schematischen Darstellung eines Wischblatts 2 einer Scheibenwischvorrichtung. Das Wischblatt 2 dient zum Wischen einer Scheibe 4 eines Fahrzeugs zum Beispiel eines Kraftfahrzeugs, insbesondere eines Pkws. Gemäß Ausführungsformen der vorliegenden Erfindung handelt es sich bei dem Wischblatts um einen Fin-Ray Wischer. Das Oberteil und das Unterteil sind an einer Verbindungsposition 16 verbunden. An einem Oberteil 10 und ein Unterteil 12 sind Verbindungselemente 18 angeordnet, die mittels Gelenken 20 mit dem Oberteil und dem Unterteil verbunden sind. Gemäß typischen Ausführungsformen der vorliegenden Erfindung existiert eine Gruppe von Gelenken, die zum Einsatz bei Fin-Ray-Wischern, insbesondere bei Kraftfahrzeugen, in vorteilhafter Weise geeignet sind.

Die folgenden Figuren illustrieren unterschiedliche Varianten dieser Gelenke. Insbesondere stellen Figuren 4A bis 4E einen in Figur 3 dargestellten Ausschnitt 90 dar. Die Gelenke sind gemäß typischen Ausführungsformen derart ausgestaltet, dass ein Freiheitsgrad existiert. Das heißt, typischerweise sind die Drehgelenke Scharniere.

Figur 4A zeigt eine 1. Gelenkvariante gemäß Ausführungsformen der vorliegenden Erfindung. Es ist das Gelenk gemäß dem in Figur 3 dargestellten Ausschnitt 90 dargestellt. Die anderen Gelenke an dem Unterteil 12 bzw. dem Oberteil 10 des Wischblatts 2 können analog ausgeführt sein. Figur 4A zeigt das Unterteil 12 mit einem Gelenkteil 102, das zylinderförmig bzw. als Hohlzylinder, der mit einem Hinterschnitt versehen ist, zur Verfügung gestellt ist. Das Verbindungselement 18 ist mit einem korrespondierenden Gelenkteil 104 ausgebildet. Das korrespondierende Gelenkteil 104 ist ein am Verbindungselement 18 zur Verfügung gestellter Zylinder oder ein Zylinder, der einstückig mit dem Verbindungselement 18 ausgebildet ist. Auch das Gelenkteil 102, d.h. der Hohlzylinder mit Hinterschnitt kann einstückig mit dem Unterteil 12 des Wischblatts 2 ausgebildet sein.

Das Gelenk 20 führt somit zu einer Beweglichkeit des Verbindungselements 18 im Bereich des Winkels 120. Dies ist ebenfalls durch Hilfslinie 121 dargestellt. Gemäß typischen Ausführungsformen kann sich das Verbindungselement 18 entlang der Drehachse des Zylinders 104 erstrecken. Das Drehgelenkt hat ein erstes Gelenkteil 102 und ein zweites Gelenkteil 104.

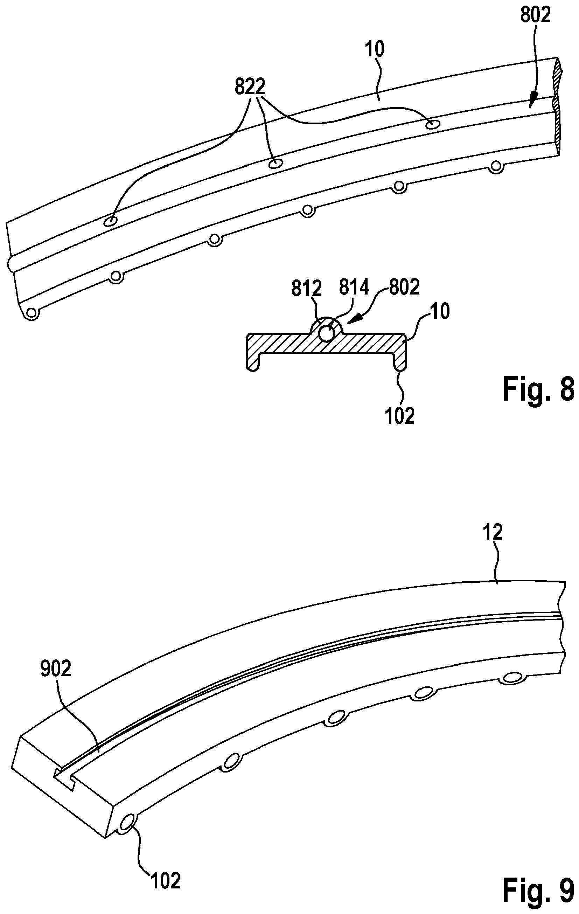

Figur 4B zeigt eine weitere Gelenkvariante gemäß Ausführungsformen der vorliegenden Erfindung. Das Drehgelenk für das Verbindungselement bzw. die Verbindungselemente 18 ist durch zwei Kugeln 104B zur Verfügung gestellt. Das am Unterteil 12 angebrachte Gelenkteil 102B bzw. das integral mit dem Unterteil 12 ausgebildete Gelenkteil 102B ist angepasst, um mit einem Hinterschnitt das Gelenkteil 104B, d.h. die Kugel, aufzunehmen. Gemäß typischen Ausführungsformen können ein bzw. 2 Verbindungselemente 18 zur Verfügung gestellt sein. Im dem Fall, dass 2 Verbindungselemente 18 zur Verfügung gestellt sind, werden diese zur Ausbildung einer Achse 103 mit einem Quersteg 105 zwischen den zwei Verbindungselementen miteinander verbunden, um eine Bewegung zu definieren, die durch Winkel 120 und Hilfslinie 121 dargestellt ist. Hierdurch kann die Bewegung im Wesentlichen auf eine Ebene beschränkt werden, die in Figur 9 der Blattebene entspricht.

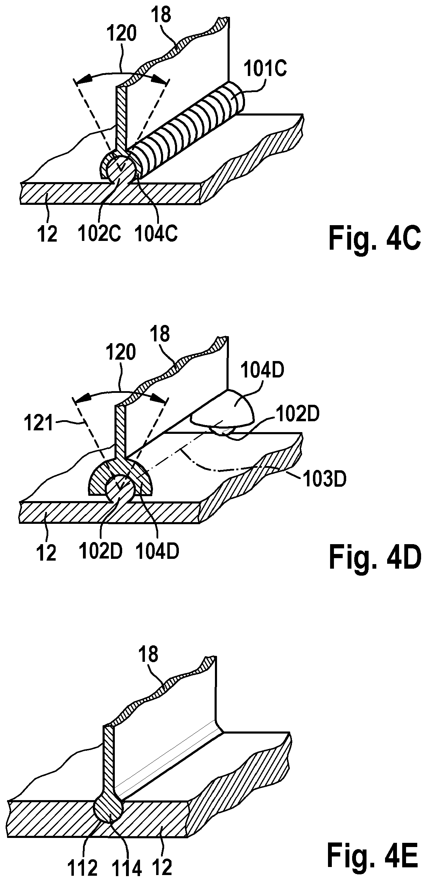

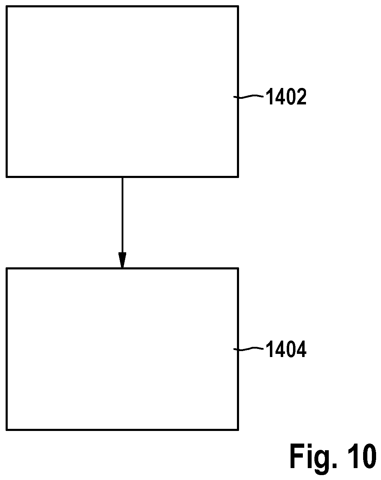

Figur 4C zeigt eine Variante eines Gelenks gemäß Ausführungsformen der Erfindung, wobei Figur 10 C ähnlich zu Figur 4A ausgestaltet ist. Im Gegensatz zu Figur 4A hat die Ausführungsform, die in Figur 4C dargestellt ist, ein Gelenkteil 102C, das als Zylinder ausgebildet ist, und ein Gelenkteil 104C, das als Hohlzylinder mit Hinterschnitt ausgebildet ist. Wie bereits erläutert, kann das Gelenkteil 100 2C integral mit dem Unterteil 12 des Wischarms 2 ausgebildet sein oder kann am Unterteil 12 angebracht sein. Analog kann das Gelenkteil 100 4C, d.h. der Hohlzylinder mit hinter Schnitt integral mit dem Verbindungselement 18 ausgebildet sein oder kann an diesem angebracht sein.

Figur 4D ist wiederum analog zu Figur 4B wobei das Gelenkteil 102C als Kugel ausgebildet ist und das Gelenkteil 104C als Hohlkugel mit Hinterschnitt ausgebildet ist. Die Hohlkugeln können wiederum über eine Achse 103D miteinander verbunden sein.

In den Figuren 4A bis 4D können die Verbindungselemente 18 an das Unterteil 12 angeklipst werden. Das Klipsen kann sowohl mit fertigen Einzelteilen erfolgen als auch im noch warmen Zustand der Werkstücke innerhalb eines Werkzeugs zur Herstellung der Werkstücke.

Figur 4E zeigt eine weitere Ausführungsform, bei der ein Gelenk mit einem ersten Gelenkteil 112 und einem zweiten Gelenkteil 114 zur Verfügung gestellt ist. Figur 4E illustriert die Gelenkteile als zylinderförmige Gelenkteile, wie sie zum Beispiel auch in Figur 4A oder Figur 4C dargestellt sind. Analog können die Gelenkteile aber auch als Kugeln, analog zu Figur 4B oder Figur 4D, ausgebildet sein.

Gemäß Ausführungsformen der vorliegenden Erfindung können unterschiedliche Scheibenwischvorrichtungen oder Wischhebel in einem Baukastenprinzip bzw. aus einem Wischhebelbaukasten montiert werden. Dabei können einzelne Komponenten in mehr als einer der unterschiedlichen Scheibenwischvorrichtungen verwendet werden, so dass sich bei der Zusammenstellung des Baukastens eine Redundanz in Bezug auf die einzelnen Komponenten ergibt. Hierdurch können komplexere Spritzgusserzeugnisse vermieden werden, bei denen typischerweise Kunden- bzw. Projektspezifisch jeweils ein individueller Wischhebel (gegebenenfalls mit niedrigen Stückzahlen) gefertigt wird.

Die Figuren 5, 6A bis 6B und 7 zeigen das Prinzip des Baukastens. Figur 5 zeigt einen Ausschnitt eines montierten Zustands eines Wischblatts 2. Ein Oberteil 10 und ein Unterteil 12 sind mit einer Mehrzahl von Verbindungselementen 18 montiert. Hierdurch kann eine Scheibenwischvorrichtung ausgebildet werden, die nach dem Finray-Prinzip funktioniert. An den Verbindungspunkten der Verbindungselemente 18 mit dem Oberteil und/oder dem Unterteil, insbesondere dem Oberteil und dem Unterteil, sind Gelenke 20 zur Verfügung gestellt. Diese werden durch klipsen oder stecken eines ersten Gelenkteils 102, das zum Beispiel seitens des Oberteils bzw. des Unterteils zur Verfügung gestellt ist, und eines zweiten Gelenkteils 104, das zum Beispiel seitens Verbindungselements 18 zur Verfügung gestellt ist, gebildet.

Wie in den Figuren 6A bis 6B gezeigt ist, hat das Baukastenprinzip vier verschiedene Bauelemente 601-604. Typischerweise sind diese Elemente ein Oberteil 10, d.h. eine obere Schiene 601 in FIG. 6A, ein Unterteil 12, d.h. eine untere Schiene 602 in FIG. 6A. Die obere Schiene und die unter Schiene weisen jeweils erste Gelenkteile 102 auf.

Gemäß Ausführungsformen der vorliegenden Erfindung wird ferner eine Mehrzahl von Verbindungselementen 18, d.h. Zwischenstegen, zur Verfügung gestellt. Diese sind exemplarisch in FIG. 6B dargestellt, wobei die Verbindungselemente bzw. Zwischenstege zweite Gelenkteile 104 und Verbindungsstege 603 aufweisen. Die Verbindungselemente bzw. Zwischenstege werden in verschiedenen Größen im Rahmen des Baukastenprinzips zur Verfügung gestellt. Somit können kürzere bzw. kleinere Verbindungselemente näher bei der Verbindungsposition 16 bzw. 34 (siehe FIG. 1A bzw. 2A) verwendet werden, während größere Verbindungselemente näher bei einem Anschlussstück verwendet werden. Hierdurch kann durch die Auswahl der Verbindungselement, die mit dem Oberteil bzw. dem Unterteil montiert werden, eine Keilform erzeugt werden. Ferner können unterschiedliche Größen von Verbindungselementen auch für unterschiedlich groß Wischarme bereitgestellt werden. Hierbei können identische Verbindungselemente für eine größere Scheibenwischvorrichtung als "kleiner" Verbindungselemente (Nahe der Verbindungsposition) und für eine kleinere Scheibenwischvorrichtung als größere Verbindungselemente (nahe des Anschlussstücks) verwendet werden.

Gemäß typischen Ausführungsformen kann die Zahl der unterschiedlichen Größen der Verbindungselemente innerhalb des Baukastenprinzips auf 20 oder weniger, zum Beispiel auf 10 oder weniger begrenzt werden. Die Verbindungselemente bzw. Zwischenstege sind somit Plattformteile, die eine Mehrfachverwendung, d.h. eine Verwendung für unterschiedliche Scheibenwischvorrichtungen, erlauben. Somit können sie hochvolumig, d.h. in großer Stückzahl, hergestellt werden was, den Teilpreis reduziert.

Gemäß noch weiteren Ausführungsformen können die Verbindungselemente oder Zwischenstege auch auf den Kundenbedarf einfach angepasst werden. Sie können in der Steifigkeit und/oder der Härte variieren, oder können sogar farbig, bedruckt, mit Werbung versehen, oder anderweitig individualisiert werden.

Wie aus FIG. 6A ersichtlich ist, können das Oberteil (obere Schiene) und das Unterteil (untere Schiene) an einem Anschlussstück zur Verfügung angebracht werden. Diese Schienen 601 und 602 können zum Beispiel durch stecken, kleben, lasern, klipsen oder ähnliches an dem Anschlussstück montiert werden. Somit kann als ein Bestandteil des Baukastens aus einer Mehrzahl von Anschlusstücken ausgewählt werden, wobei die Anschlusstücke spezifisch für den Kunden bzw. Projekte oder Fahrzeuge ausgewählt werden kann. Somit reduziert sich auch hier die Komplexität des Werkzeugs zur Herstellung, was eine OEM Bündelung mit ebenfalls höheren Stückzahlen und den damit verbundenen niedrigeren Kosten mit sich bringt.

Ausführungsformen der vorliegenden Erfindung erlauben, im Vergleich zu Spritzwerkzeugen, bei denen ein Wischblatt einstückig bzw. werkzeugfallend hergestellt wird, einfachere Spritzwerkzeuge. Insbesondere können Spritzwerkzeuge für Schienen bzw. Oberteil und/oder Unterteil und für die Verbindungselemente, d.h. die Zwischenstege, getrennt voneinander zur Verfügung gestellt werden. Folglich umfassen die Verfahren zur Herstellung gegebenenfalls spritzen eines Elements des Baukastens in einem Spritzwerkzeug und spritzen eines anderen Elements in einem anderen Spritzwerkzeug.

Durch die separate Herstellung kann gemäß manschen Ausführungsformen, das Material einer Schiene bzw. des Oberteils und/oder Unterteils anders gewählt werden als das Material des Verbindungselements. Gemäß typischen Ausführungsformen haben ist die Scheibenwischvorrichtung, insbesondere das Wischblatt aus mehreren Materialen aus einer Gruppe bestehend aus: PP, PE, POM, PA, und TPE (Thermoplastischem Elastomer), beispielsweise TPE-S, TPE-O, TPE-U, TPE-A TPE-V und TPE-E hergestellt. Durch die Wahl unterschiedlicher Materialien können je nach Element auch günstige Materialien eingesetzt werden was die Kosten für die Scheibenwischvorrichtung reduziert.

FIG. 7 zeigt einen vergrößerten Ausschnitt eines montierten Verbindungselements 18 bzw. eines Zwischenstegs an einem Oberteil 10 (einer oberen Schiene) und einem Unterteil 12 (einer unteren Schiene). Die ersten Gelenkteile 102 werden durch Öffnungen in der jeweiligen Schiene gebildet. Die zweiten Gelenkteile 104 werden durch hervorstehende Elemente gebildet, die in die Öffnungen eingeschoben werden können. Alternativ können jedoch auch kugelförmige oder zylinderförmige Gelenkteile, wobei jeweils ein Hinterschnitt zur Verfügung gestellt wird, verwendet werden. Dies ist in den Figuren 4A bis 4E beschrieben.

Die oben beschriebenen vereinfachten Spritzwerkzeuge erlauben ferner eine einfach Applikation von weiteren Merkmalen, wie Sie zum Beispiel in den Figuren 8 und 9 dargestellt ist.

Figur 8 zeigt eine Schiene zum Beispiel die Schiene als Oberteil 10, wobei eine integrierte Wasserführung 802 für Scheibenwischwasser zur Verfügung gestellt ist. Die Wasserführung 802 beinhaltet eine Leitung 812, wie zum Beispiel eine Röhre, wobei in einem Hohlraum Wischwasser geleitet werden kann. An zumindest einer Position entlang der Längserstreckung der Scheibenwischvorrichtung, bevorzugt an einer Mehrzahl von Positionen zum Beispiel 5 bis 50 Positionen, können Öffnungen 822 in der Leitung 812 zur Verfügung gestellt sein. Zum Beispiel können die Öffnungen als Düsen ausgebildet sein. Durch die Öffnungen kann das Wischwasser auf die Scheib gespritzt werden. Eine Integration einer Wasserführung für Wischwasser, zum Beispiel inklusive von Spritzdüsen, kann somit in einem Kunststoffwerkzeug bzw. Spritzwerkzeug hergestellt werden. Gemäß anderen Ausführungsforen kann eine Wasserführung jedoch auch im Unterteil oder im Unterteil und im Oberteil zur Verfügung gestellt werden.

Figur 9 zeigt eine Schiene, die typischerweise ein Unterteil 12 ist. Eine Montageschiene 902 für eine Wischlippe ist am Unterteil integriert. Unter anderem durch die Vereinfachung der Spritzwerkzeuge im Baukastenprinzip kann eine Integration weiterer Elemente einfach realisiert werden. Eine Wischlippe kann in die Montageschiene einfach eingeführt werden oder an dieser befestigt werden. Somit kann bei einem Verschleiß der Wischlippe diese lediglich durch entfernen aus der Schiene und einführen einer neuen Wischlippe einfach gewechselt werden. Weiterhin ist bei einer solchen Art der Auswechslung der Wischlippe der Materialaufwand für den Ersatz reduziert bzw. minimal was im Hinblick auf Kosten und Ökologie eine Verbesserung bewirkt.

In Bezug auf Figur 9 kann eine weitere Ausführungsform eines Baukastens auch dahingehend bereitgestellt werden, dass eine Wischlippe ein weiteres Element des Baukastens ist. Es kann hierbei eine begrenzte Anzahl an Wischlippen für unterschiedliche Fahrzeugtypen, Kunden und/oder Projekt, und/oder auch für unterschiedliche Bedingungen (Sommer / Winter) zur Verfügung gestellt werden. Diese können im Rahmen des Baukastenprinzips einfach zur Verfügung gestellt werden.

Figur 10 zeigt schematisch ein Ablaufdiagramm zur Illustration von Verfahren zur Herstellung einer Scheinwischvorrichtung, zum Beispiel einer Scheibenwischvorrichtung wie sie im Zusammenhang mit den Figuren 4A bis 4E beschrieben ist. Das Verfahren beinhaltet (siehe Schritt 1402) das Herstellen eins Oberteils, das zumindest teilweise biegbar ausgestaltet ist und erste Gelenkteile aufweist, das Herstellen eines Unterteils, das zumindest teilweise biegbar ausgestaltet ist und erste Gelenkteile aufweist, und das Herstellen mehrere Verbindungselemente zum Verbinden des Oberteils und des Unterteils, wobei die Verbindungselemente jeweils zweite Gelenkteile aufweisen. Das Verfahren beinhaltet (siehe Schritt 1404) Zusammenklipsen oder zusammenstecken der ersten und zweiten Gelenkteile. Ferner beinhaltet das Verfahren das Verbinden mit einer Halterung oder einem Anschlussstück.

Figur 10 kann auch zur Illustration eines Herstellungsverfahrens einer Vorrichtung, wie sie insbesondere in Bezug auf FIG. 4E beschrieben ist, verwendet werden. Das Verfahren beinhaltet (siehe Schritt 1402) das Herstellen eins Oberteils, das zumindest teilweise biegbar ausgestaltet ist und erste Gelenkteile aufweist, das Herstellen eines Unterteils, das zumindest teilweise biegbar ausgestaltet ist und erste Gelenkteile aufweist, und das Herstellen mehrere Verbindungselemente zum Verbinden des Oberteils und des Unterteils, wobei die Verbindungselemente jeweils zweite Gelenkteile aufweisen. Das Verfahren beinhaltet (siehe Schritt 1404) das Aufbiegen von Oberteil und/oder Unterteil, so dass die Öffnungen der Hohlzylinder 112 im Bereich des Hinterschnitts vergrößert werden. Somit können die Verbindungselement 18 eingefügt werden worauf die Biegung des Oberteils bzw. Unterteils reduziert wird, so dass der Hinterschnitt den Zylinder 114 umgreift. Auf diese Weise können von einem Ende des Wischblatts zum gegenüberliegenden Ende des Wischblatts eine Mehrzahl von Verbindungselement eingefügt werden. Insbesondere kann dies sowohl mit dem Oberteil als auch mit dem Unterteil durchgeführt werden, um einen Zusammenbau der Scheibenwischvorrichtung herbeizuführen. Ferner beinhaltet das Verfahren das Verbinden mit einer Halterung oder einem Anschlussstück.

Gemäß typischen Ausführungsformen der vorliegenden Erfindung, die mit anderen Ausführungsformen kombiniert werden können, handelt es sich bei dem Gelenk (siehe Referenzzeichen 20 in Figur 9) bzw. dem Drehgelenk 20 um ein Scharnier. D.h. es werden 2 Ebenen drehbar miteinander verbunden. In anderen Worten, ein Drehgelenk oder ein Lager mit einem Freiheitsgrad wird zur Verfügung gestellt.

Bei den Drehgelenken gemäß der Figuren 4A bis 4E, d.h. bei Gelenken oder Scharnieren, die zweiteilig ausgebildet sind, kann insbesondere ein gutes Kriechverhalten, z.B. eine hohe Kriechbeständigkeit zur Verfügung gestellt werden. Die Materialien können derart gewählt werden, dass insbesondere bei hohen Temperaturen keine dauerhafte Verformung der Gelenke existiert. Dadurch kann eine verbesserte Langlebigkeit des Wischblatts 2 zur Verfügung gestellt werden. Insbesondere für zweiteilige Gelenke, die nicht mit einem 2K-Spritzverfahren hergestellt sind, kann der Zylinder oder die Kugel bzw. der Hohlzylinder oder die Hohlkugel, jeweils mit hinter Schnitt, aus demselben Material gefertigt werden. Temperaturschwankungen beeinträchtigen somit die Funktion des Gelenks in einem sehr geringen Ausmaß.

Obwohl die zweiteilige Ausführung des Gelenks gegebenenfalls mit leicht erhöhten Herstellungskosten in Verbindung steht (die Gelenke müssen geklipst werden), kann dies insbesondere für den Aufbau eines Baukastenprinzips vorteilhaft sein, da bei der Verwendung von identischen Elementen für unterschiedliche Scheibenwischvorrichtungen, die produzierten Stückzahlen erhöht werden können, und somit diesbezüglich die Kosten gesenkt werden können.

Obwohl die Figuren 4A bis 4E jeweils lediglich einen Ausschnitt des Unterteils 12 mit einem entsprechenden Gelenk 20 darstellen, ist gemäß Ausführungsformen von Wischblättern ein entsprechendes Gelenk ebenfalls an anderen Positionen des Unterteils 12 sowie an den Positionen des Oberteils 10 zur Verfügung gestellt. Gemäß noch weiteren Ausführungsformen, die mit anderen Ausführungsformen kombiniert werden können, können mehrere der in dieser Offenbarung beschriebenen Gelenkvarianten miteinander zur Ausgestaltung an einem Wischblatts zur Verfügung gestellt werden. Zum Beispiel kann ein Gelenk gemäß einer Ausführungsform in einem ersten Bereich der Längserstreckung des Wischblatts verwendet werden, während in einem zweiten Bereich der Längserstreckung des Wischblatts ein Gelenk gemäß einer anderen Ausführungsform verwendet wird.

Gemäß weiteren typischen Ausführungsformen, kann am Unterteil 12 des in Figur 3 dargestellten Wischblatts 2 eine Wischlippe zur Verfügung gestellt werden. Die Wischlippe wischt über die Scheibe des Fahrzeugs, um diese zu reinigen.

Zum Beispiel kann die Lippe aus demselben Material wie das Wischblatt bestehen. Die Lippe kann aus einem anderen Material bestehen. Es kann an dem Unterteil des Wischblatts 12 eine Aufnahme zur Verfügung gestellt werden, so dass die Wischlippe eingefädelt werden kann. Dies bietet den Vorteil, dass zum Wechsel des Wischblatts lediglich die Wischlippe ausgetauscht werden muss und somit eine Materialeinsparung möglich ist.

Figur 15 zeigt schematisch ein Ablaufdiagramm zur Illustration von Verfahren zur Herstellung einer Scheinwischvorrichtung, zum Beispiel mit einem Filmscharnier. Zum Beispiel wird in Schritt 1502 ein einstückig ausgebildetes Wischblatt mit einem Oberteil, das zumindest teilweise biegbar ausgestaltet ist, einem Unterteil, das zumindest teilweise biegbar ausgestaltet ist, und mehrere Verbindungselementen, wobei die Verbindungselemente entlang einer Längserstreckung der Scheibenwischvorrichtung voneinander beabstandet sind, hergestellt. Dies kann zum Beispiel durch ein Spritzgussverfahren erfolgen.

Gemäß den hier beschriebenen Ausführungsformen können Fin-Ray Wischer für Fahrzeugscheiben auf besonders günstige Weise und/oder für eine Mehrzahl unterschiedlicher Einsatzgebiete hergestellt werden. Es können mit einem Baukastenprinzip bzw. einem Wischhebelbaukasten einfachere Spritzwerkzeuge verwendet werden. Ferner könne Elemente als Plattformteile mit hochvolumigen Stückzahlen und günstigen Preisen bereitgestellt werden. Unterschiedliche Materialien können durch das Baukastenprinzip günstig und sinnvoll kombiniert werden. Ferner können Teile bzw. Elemente Zykluszeit optimiert werden, was wiederum die Bauteilkosten reduziert. Durch die einfacheren Bauteilgeometrie der einzelnen Element können ferner mögliche technische Probleme bei komplexen Bauteilen, wie zum Beispiel werkzeugfallende Wischhebel mit Filmscharnieren, reduziert oder eliminiert werden. Ein Wischhebelbaukasten ermöglicht ferner ein einfaches Austauschen von beschädigten Elementen. Dadurch, dass in einem Baukasten nur Einzelteile ausgetauscht werden müssen, kann die Kundenzufriedenheit gesteigert werden. Durch Ausführungsformen der vorliegenden Erfindung kann zumindest ein oder können mehrere der oben genannten Vorteile zumindest teilweise erzielt werden. Es kann ein Finray-Wischer mit Komponenten bzw. Elementen, die im Rahmen eines Baukastenprinzips oder eines Wischhebelbaukastens zur Verfügung gestellt werden, bereitgestellt werden.

## Patentansprüche

1. Scheibenwischvorrichtung (2; 28, 30; 74; 78) für ein Fahrzeug, insbesondere ein Kraftfahrzeug, umfassend
- einem langgestreckten Oberteil (10), das zumindest teilweise biegbar ausgestaltet ist,
- einem langgestreckten Unterteil (12), das zumindest teilweise biegbar ausgestaltet ist, und
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen, wobei die Verbindungselemente mittels Drehgelenken mit dem Unterteil (1) und dem Oberteil (10) verbunden sind, und wobei das Oberteil und das Unterteil mit einem Anschlussstück verbunden sind, wobei alle Elemente aus der Gruppe bestehend aus: dem Oberteil, dem Unterteil, einem Verbindungselement der mehreren Verbindungselemente, und dem Anschlussstück, individuell ausgewechselt werden können.

2. Scheibenwischvorrichtung nach Anspruch 1, wobei die Verbindungselement mittels weiteren Drehgelenken (20; 130; 122) an dem Oberteil befestigt sind.

3. Scheibenwischvorrichtung nach einem der Ansprüche 1 bis 2, wobei die Drehgelenke und/oder die weiteren Drehgelenke eine erstes Gelenkteil (102; 102B; 102C, 102D, 112, 104; 104B; 104C, 104D, 114) und ein zweites Gelenkteil (104; 104B; 104C, 104D, 114, 102; 102B; 102C, 102D, 112) umfassen.

4. Scheibenwischvorrichtung nach Anspruch 3, wobei das erste Gelenkteil (102C, 102D, 104, 104B, 114) zylinderförmig oder kugelförmig ist und das zweite Gelenkteil (102; 102B; 104C, 104D, 112) einen Hinterschnitt zur Aufnahme des ersten Gelenkteils umfasst.

5. Scheibenwischvorrichtung nach einem der Ansprüche 2 bis 4, wobei das erste und das zweite Gelenkteil aneinander geklipst oder zusammengesteckt werden.

6. Scheibenwischvorrichtung nach einem der Ansprüche 1 bis 5, wobei das Oberteil (10) und das Unterteil (12), insbesondere in einem Endbereich der Scheibenwischvorrichtung (2; 28, 30; 74; 78), an einer äußeren Verbindungsposition (14, 16; 34) fest miteinander verbunden sind, wobei die äußere Verbindungsposition (14, 16; 34) insbesondere in eine in Längserstreckung (8) der Scheibenwischvorrichtung (2; 28, 30; 74; 78) von außen nach innen weisende Richtung betrachtet, vor den Verbindungselementen (18) ausgebildet ist.

7. Scheibenwischvorrichtung nach Anspruch 1 bis 6, wobei die Längsachsen (24) der Verbindungselemente (18) in Winkeln (26) zum Unterteil (12) verlaufen, die von 45° bis 135°, insbesondere von 65° und 115°zur Verfügung gestellt sind.

8. Scheibenwischvorrichtung nach einem der Ansprüche 1 bis 7, wobei ein Abstand (22) zwischen jeweils zwei benachbarten Verbindungselementen (18) kleiner als 50 mm, insbesondere kleiner als 30 mm, ist.

9. Scheibenwischvorrichtung nach einem der Ansprüche 1 bis 8, wobei eine biegbare Scheibenwischerlippe (80) an einer Seite des Unterteils (12) angebracht ist, die dem Oberteil (10) abgewandt ist.

10. Scheibenwischvorrichtung nach Anspruch 9, wobei die Scheibenwischerlippe in eine Aussparung oder Schiene am Unterteil eingeführt ist, insbesondere lösbar verbindbar ist.

11. Scheibenwischvorrichtung nach einem der Ansprüche 1 bis 10, wobei das Oberteil und/oder das Unterteil eine Zuleitung für Wasser aufweist.

12. Scheibenwischervorrichtung nach Anspruch 11, wobei die Zuleitung eine Röhre zur Wasserführung ist, insbesondere eine mit dem Oberteil und/oder Unterteil einstückig ausgebildete Röhre ist.

13. Scheibenwischvorrichtung nach einem der Ansprüche 11 bis 12, wobei die Zuleitung weiterhin Öffnungen, insbesondere Düsenöffnungen, umfasst.

14. Scheibenwischvorrichtung nach einem der Ansprüche 1 bis 13, wobei zwischen dem Oberteil (10) und dem Unterteil (12) ein Zwischenraum (82) ausgebildet ist, in dem ein Spoiler (76) zum Beeinflussen einer in den Zwischenraum (82) eindringenden Luftströmung angeordnet ist.

15. Scheibenwischvorrichtung nach einem der Ansprüche 1 bis 14, wobei die Drehgelenke (20; 130; 122) eine Biegesteifigkeit von 75Nmm/rad oder kleiner haben.

16. Verfahren zum Herstellen einer Scheibenwischvorrichtung nach einem der Ansprüche 1 bis 15, umfassend:
- herstellen eines Oberteils (10), das zumindest teilweise biegbar ausgestaltet ist,
- herstellen eines Unterteils (12), das zumindest teilweise biegbar ausgestaltet ist,
- herstellen mehrerer Verbindungselemente (18) zum Verbinden des Oberteils (10) und des Unterteils (12)
- herstellen eines Anschlussstücks, wobei zumindest eines der Elemente ausgewählt aus der Gruppe aus Oberteil, Unterteil, der mehreren Verbindungselement, und des Anschlussstücks durch spritzen hergestellt werden; und
montieren der Elemente ausgewählt aus der Gruppe aus Oberteil, Unterteil, der mehreren Verbindungselement, und des Anschlussstücks, wobei das montieren insbesondere stecken oder klipsen beinhaltet, wobei die Verbindungselemente (18) entlang einer Längserstreckung (8) des Wischblatts (2) voneinander beabstandet sind, wobei die Verbindungselemente mittels Drehgelenken mit dem Unterteil (1) und dem Oberteil (10) verbunden sind, wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen.

17. Verfahren nach Anspruch 16, wobei das montieren des Anschlussstücks stecken, kleben oder lasern beinhaltet.

18. Verfahren nach einem der Ansprüche 16 bis 17, wobei durch die Elemente ausgewählt aus der Gruppe aus Oberteil, Unterteil, der mehreren Verbindungselement, und des Anschlussstücks, ein Baukasten zur Verfügung gestellt wird, so dass unterschiedliche Scheibenwischvorrichtungen montiert werden können.

19. Baukasten für die Herstellung von zumindest zwei Scheibenwischvorrichtungen, jeweils gemäß einem der Ansprüche 1 bis 16, umfassend:
Elemente aus der Gruppe beinhaltend:
zumindest zwei langgestreckten Oberteil (10), die zumindest teilweise biegbar ausgestaltet sind,
zumindest zwei langgestreckten Unterteilen (12), die zumindest teilweise biegbar ausgestaltet ist, und
mehreren Verbindungselementen (18) zum Verbinden eines der zumindest zwei Oberteile (10) und eines der zumindest zwei Unterteile (12), wobei die Verbindungselemente (18) entlang einer Längserstreckung (8) des Wischblatts (2) voneinander beabstandet sind, wobei die Verbindungselemente (18) ausgelegt sind, um eine Bewegung von Oberteil (10) und Unterteil relativ zu einander mit einer Bewegungskomponente entlang einer Längserstreckung (8) des Wischblatts (2) zu ermöglichen,
wobei aus den zumindest zwei langestreckten Oberteilen, den zumindest zwei langestreckten Unterteilen und den mehreren Verbindungselementen zumindest zwei unterschiedliche Scheibenwischvorrichtungen montierbar sind, und wobei für beide der zwei unterschiedlichen Scheibenwischvorrichtungen zumindest eines der verwendeten Elemente identisch ist.

## Claims

1. Windshield wiper device (2; 28, 30; 74; 78) for a vehicle, in particular a motor vehicle, comprising:
- an elongate upper part (10) which is designed to be at least partially flexible,
- an elongate lower part (12) which is designed to be at least partially flexible,
- multiple connecting elements (18) for connecting the upper part (10) and the lower part (12), wherein the connecting elements (18) are spaced apart from one another along a longitudinal extent (8) of the wiper blade (2), wherein the connecting elements (18) are designed to permit a movement of the upper part (10) and of the lower part relative to one another with a movement component along a longitudinal extent (8) of the wiper blade (2), wherein the connecting elements are connected by way of rotary joints to the lower part (1) and to the upper part (10), and wherein the upper part and the lower part are connected to an attachment piece, wherein all of the elements from the following group can be individually exchanged: the upper part, the lower part, a connecting element of the multiple connecting elements, and the attachment piece.

2. Windshield wiper device according to Claim 1, wherein the connecting elements are fastened to the upper part by way of further rotary joints (20; 130; 122).

3. Windshield wiper device according to either of Claims 1 and 2, wherein the rotary joints and/or the further rotary joints comprise a first joint part (102; 102B; 102C, 102D, 112, 104; 104B; 104C, 104D, 114) and a second joint part (104; 104B; 104C, 104D, 114, 102; 102B; 102C, 102D, 112).

4. Windshield wiper device according to Claim 3, wherein the first joint part (102C, 102D, 104, 104B, 114) is of cylindrical or spherical form and the second joint part (102; 102B; 104C, 104D, 112) comprises an undercut for receiving the first joint part.

5. Windshield wiper device according to any of Claims 2 to 4, wherein the first and the second joint part are clipped to one another or are plugged together.

6. Windshield wiper device according to any of claims 1 to 5, wherein the upper part (10) and the lower part (12) are fixedly connected to one another, in particular in an end region of the windshield wiper device (2; 28, 30; 74; 78), at an outer connecting position (14, 16; 34), wherein the outer connecting position (14, 16; 34) is in particular formed in front of the connecting elements (18) as viewed in a direction pointing from the outside inward in the direction of longitudinal extent (8) of the windshield wiper device (2; 28, 30; 74; 78).

7. Windshield wiper device according to Claim 1 to 6, wherein the longitudinal axes (24) of the connecting elements (18) run at angles (26) relative to the lower part (12), which angles are provided so as to be from 45° to 135°, in particular from 65° to 115°.

8. Windshield wiper device according to any of claims 1 to 7, wherein a spacing (22) between in each case two adjacent connecting elements (18) is less than 50 mm, in particular less than 30 mm.

9. Windshield wiper device according to any of claims 1 to 8, wherein a flexible windshield wiper lip (80) is attached to a side, which is averted from the upper part (10), of the lower part (12).

10. Windshield wiper device according to Claim 9, wherein the windshield wiper lip is inserted, in particular is detachably connectable, into a recess or rail on the lower part.

11. Windshield wiper device according to any of claims 1 to 10, wherein the upper part and/or the lower part have/has a supply line for water.

12. Windshield wiper device according to Claim 11, wherein the supply line is a pipe for conducting water, in particular a pipe formed in one piece with the upper part and/or lower part.

13. Windshield wiper device according to either of Claims 11 and 12, wherein the supply line furthermore comprises openings, in particular nozzle openings.

14. Windshield wiper device according to any of Claims 1 to 13, wherein, between the upper part (10) and the lower part (12), there is formed an intermediate space (82) in which there is arranged a spoiler (76) for influencing an air flow which ingresses into the intermediate space (82).

15. Windshield wiper device according to any of Claims 1 to 14, wherein the rotary joints (20; 130; 122) have a flexural stiffness of 75 Nmm/rad or less.

16. A method for producing a windshield wiper device according to any of Claims 1 to 15, comprising:
- producing an upper part (10) which is designed to be at least partially flexible,
- producing a lower part (12) which is designed to be at least partially flexible,
- producing multiple connecting elements (18) for connecting the upper part (10) and the lower part (12),
- producing an attachment piece, wherein at least one of the elements selected from the following group are produced by injection moulding: upper part, lower part, the multiple connecting elements, and the attachment piece; and
assembling the elements selected from the following group: upper part, lower part, the multiple connecting elements, and the attachment piece, wherein the assembling comprises in particular plugging or clipping, wherein the connecting elements (18) are spaced apart from one another along a longitudinal extent (8) of the wiper blade (2), wherein the connecting elements (18) are connected by way of rotary joints to the lower part (1) and to the upper part (10), wherein the connecting elements (18) are designed to permit a movement of the upper part (10) and of the lower part relative to one another with a movement component along a longitudinal extent (8) of the wiper blade (2).

17. The method according to Claim 16, wherein the assembling of the attachment piece comprises plugging, adhesive bonding or lasering.

18. The method according to either of Claims 16 and 17, wherein, by way of the elements selected from the following group: upper part, lower part, the multiple connecting elements, and the attachment piece, a modular kit is provided, such that different windshield wiper devices can be assembled.

19. A modular kit for the production of at least two windshield wiper devices, in each case according to any of Claims 1 to 16, comprising:
elements from the following group:
at least two elongate upper parts (10) which are designed to be at least partially flexible,
at least two elongate lower parts (12) which are designed to be at least partially flexible, and
multiple connecting elements (18) for connecting one of the at least two upper parts (10) and one of the at least two lower parts (12), wherein the connecting elements (18) are spaced apart from one another along a longitudinal extent (8) of the wiper blade (2), wherein the connecting elements (18) are designed to permit a movement of the upper part (10) and of the lower part relative to one another with a movement component along a longitudinal extent (8) of the wiper blade (2),
wherein at least two different windshield wiper devices can be assembled from the at least two elongate upper parts, the at least two elongate lower parts and the multiple connecting elements, and wherein at least one of the elements used is identical for both of the two different windshield wiper devices.

## Revendications

1. Dispositif d'essuie-glace (2 ; 28, 30 ; 74 ; 78) pour un véhicule, notamment un véhicule automobile, comprenant :
- une partie supérieure allongée (10) qui est configurée de manière au moins partiellement flexible,
- une partie inférieure allongée (12) qui est configurée de manière au moins partiellement flexible, et
- plusieurs éléments de liaison (18) pour relier la partie supérieure (10) et la partie inférieure (12), les éléments de liaison (18) étant espacés les uns des autres le long d'une étendue longitudinale (8) du balai d'essuie-glace (2), les éléments de liaison (18) étant configurés de manière à permettre un mouvement de la partie supérieure (10) et de la partie inférieure l'une par rapport à l'autre avec une composante de mouvement le long d'une étendue longitudinale (8) du balai d'essuie-glace (2), les éléments de liaison étant reliés au moyen d'articulations de rotation à la partie inférieure (1) et à la partie supérieure (10), et la partie supérieure et la partie inférieure étant reliées à une pièce de raccordement, tous les éléments dans le groupe constitué de : la partie supérieure, la partie inférieure, un élément de liaison parmi les multiples éléments de liaison et la pièce de raccordement pouvant être remplacés individuellement.

2. Dispositif d'essuie-glace selon la revendication 1, dans lequel les éléments de liaison sont fixés à la partie supérieure au moyen d'autres articulations de rotation (20 ; 130 ; 122).

3. Dispositif d'essuie-glace selon l'une des revendications 1 à 2, dans lequel les articulations de rotation et/ou les autres articulations de rotation comportent une première partie d'articulation (102 ; 102B ; 102C, 102D, 112, 104 ; 104B ; 104C, 104D, 114) et une seconde partie d'articulation (104 ; 104B ; 104C, 104D, 114, 102 ; 102B ; 102C, 102D, 112).

4. Dispositif d'essuie-glace selon la revendication 3, dans lequel la première partie d'articulation (102C, 102D, 104, 104B, 114) est de forme cylindrique ou sphérique et la seconde partie d'articulation (102 ; 102B ; 104C, 104D, 112) comporte une contre-dépouille pour recevoir la première partie d'articulation.

5. Dispositif d'essuie-glace selon l'une des revendications 2 à 4, dans lequel la première et la seconde partie d'articulation sont assemblées l'une à l'autre par enclipsage ou enfichage.

6. Dispositif d'essuie-glace selon l'une des revendications 1 à 5, dans lequel la partie supérieure (10) et la partie inférieure (12), notamment dans une région d'extrémité du dispositif de balai d'essuie-glace (2 ; 28, 30 ; 74 ; 78) sont reliées solidairement l'une à l'autre à une position de liaison extérieure (14, 16 ; 34), dans lequel, considérée notamment dans une direction tournée de l'extérieur vers l'intérieur dans l'étendue longitudinale (8) du dispositif d'essuie-glace (2 ; 28, 30 ; 74 ; 78), la position de liaison extérieure (14, 16 ; 34) est réalisée avant les éléments de liaison (18).

7. Dispositif d'essuie-glace selon l'une des revendications 1 à 6, dans lequel les axes longitudinaux (24) des éléments de liaison (18) s'étendent par rapport à la partie inférieure (12) suivant des angles (26) qui sont compris entre 45° et 135°, notamment entre 65° et 115°.

8. Dispositif d'essuie-glace selon l'une des revendications 1 à 7, dans lequel une distance (22) entre deux éléments de liaison voisins (18) est respectivement inférieure à 50 mm, notamment inférieure à 30 mm.

9. Dispositif d'essuie-glace selon l'une des revendications 1 à 8, dans lequel une lèvre de balai d'essuie-glace flexible (80) est installée sur un côté de la partie inférieure (12) qui est opposé à la partie supérieure (10).

10. Dispositif d'essuie-glace selon la revendication 9, dans lequel la lèvre de balai d'essuie-glace est introduite dans un évidement ou un rail sur la partie inférieure, notamment par une liaison amovible.

11. Dispositif d'essuie-glace selon l'une des revendications 1 à 10, dans lequel la partie supérieure et/ou la partie inférieure comprennent une conduite d'amenée d'eau.

12. Dispositif d'essuie-glace selon la revendication 11, dans lequel la conduite d'amenée est un tube pour conduire l'eau, notamment un tube formé d'un seul tenant avec la partie supérieure et/ou la partie inférieure.

13. Dispositif d'essuie-glace selon l'une des revendications 11 à 12, dans lequel la conduite d'amenée comporte en outre des orifices, notamment des orifices formant des buses.

14. Dispositif d'essuie-glace selon l'une des revendications 1 à 13, dans lequel un espace intermédiaire (82) est formé entre la partie supérieure (10) et la partie inférieure (12), espace dans lequel est disposé un déflecteur (76) servant à influencer un écoulement d'air pénétrant dans l'espace intermédiaire (82).

15. Dispositif d'essuie-glace selon l'une des revendications 1 à 14, dans lequel les articulations de rotation (20 ; 130 ; 122) ont une rigidité à la flexion inférieure ou égale à 75Nmm/rad.

16. Procédé de fabrication d'un dispositif d'essuie-glace selon l'une des revendications 1 à 15, comportant :
- la fabrication d'une partie supérieure (10) qui est configurée de manière au moins partiellement flexible,
- la fabrication d'une partie inférieure (12) qui est configurée de manière au moins partiellement flexible,
- la fabrication de plusieurs éléments de liaison (18) pour relier la partie supérieure (10) et la partie inférieure (12),
- la fabrication d'une pièce de raccordement, au moins l'un des éléments choisis dans le groupe constitué de la partie supérieure, de la partie inférieure, des multiples éléments de liaison et de la pièce de raccordement étant fabriqué par injection ; et
- le montage des éléments choisis dans le groupe constitué de la partie supérieure, de la partie inférieure, des multiples éléments de liaison et de la pièce de raccordement, le montage comportant notamment l'enfichage ou l'enclipsage, les éléments de liaison (18) étant espacés les uns des autres le long d'une étendue longitudinale (8) du balai d'essuie-glace (2), les éléments de liaison étant reliés à la partie inférieure (1) et à la partie supérieure (10) au moyen d'articulations de rotation, les éléments de liaison (18) étant conçus pour permettre un mouvement de la partie supérieure (10) et de la partie inférieure l'une par rapport à l'autre avec une composante de mouvement le long d'une étendue longitudinale (8) du balai d'essuie-glace (2).

17. Procédé selon la revendication 16, dans lequel le montage de la pièce de raccordement comporte l'enfichage, le collage ou la fixation par laser.

18. Procédé selon la revendication 16 ou 17, dans lequel au moyen des éléments choisis dans le groupe constitué de la partie supérieure, de la partie inférieure, des multiples éléments de liaison et de la pièce de raccordement, un kit de construction permettant de monter différents dispositifs d'essuie-glace est fourni.

19. Kit de construction pour la fabrication d'au moins deux dispositifs d'essuie-glace, respectivement selon l'une des revendications 1 à 16, comportant :
des éléments du groupe composé :
d'au moins deux parties supérieures (10) allongées qui sont configurées de manière au moins partiellement flexible,
d'au moins deux parties inférieures (12) allongées qui sont configurées de manière au moins partiellement flexible, et
de plusieurs éléments de liaison (18) pour relier l'une des au moins deux parties supérieures (10) et l'une des au moins deux parties inférieures (12),
les éléments de liaison (18) étant espacés les uns des autres le long d'une étendue longitudinale (8) du balai d'essuie-glace (2), les éléments de liaison (18) étant conçus de manière à permettre un mouvement de la partie supérieure (10) et de la partie inférieure l'une par rapport à l'autre avec une composante de mouvement le long d'une étendue longitudinale (8) du balai d'essuie-glace (2),
et à partir des au moins deux parties supérieures allongées, des au moins deux parties inférieures allongées et des multiples éléments de liaison, au moins deux dispositifs d'essuie-glace différents pouvant être montés, et pour les deux dispositifs d'essuie-glace différents, au moins l'un des éléments de liaison utilisés étant identique.
